# FASCICULE DE BREVET EUROPEEN

(11) **EP 2 045 765 B1**
(45) Date de publication et mention de la délivrance du brevet: **24.07.2013**
(21) Numéro de dépôt: 08165384.2
(22) Date de dépôt: 29.09.2008
(51) Int. Cl.: G06K 19/077, G06K 19/04

(54) **Procédé de fabrication d'une clé électronique à connecteur USB**
Verfahren zur Herstellung eines elektronischen Schlüssels mit USB-Stecker
Method of manufacturing an electronic key with USB connector

(30) Priorité: 28.09.2007 FR 0706841
(43) Date de publication de la demande: 08.04.2009
(73) Titulaire: Oberthur Technologies, 92700 Colombes (FR)
(72) Inventeur: Garnier, Laurent, 35680 Moulins (FR)
(74) Mandataire: Esselin, Sophie

(56) Documents cités:
- WO-A-2005/031639
- WO-A-2006/018230
- WO-A-2006/027027
- DE-U1-202006 013 115
- US-A1- 2004 027 817

## Description

La présente invention concerne un procédé de fabrication pour la réalisation d'une clé électronique à connecteur USB muni d'un détrompeur mécanique et une clé électronique correspondante.

Les clefs électroniques USB sont d'usage courant, utilisées par des dispositifs électroniques tels que des ordinateurs personnels, des téléphones mobiles, des imprimantes,.... qui sont autant de ports périphériques de ces dispositifs. Ces clefs peuvent comporter différentes fonctions, dont des fonctions mémoire, de sécurité ou autres.

Elles doivent répondre à une norme qui définit notamment les caractéristiques mécanique et électrique de l'interface USB. Une clef USB conforme à la norme doit ainsi comporter un connecteur mâle tandis que les ports périphériques USB des dispositifs électroniques doivent comporter des connecteurs femelles. Par ailleurs, une clef USB comporte une partie qui n'est pas introduite dans le connecteur et qui permet notamment sa préhension. L'ensemble doit offrir une résistance mécanique à la torsion et à la flexion.

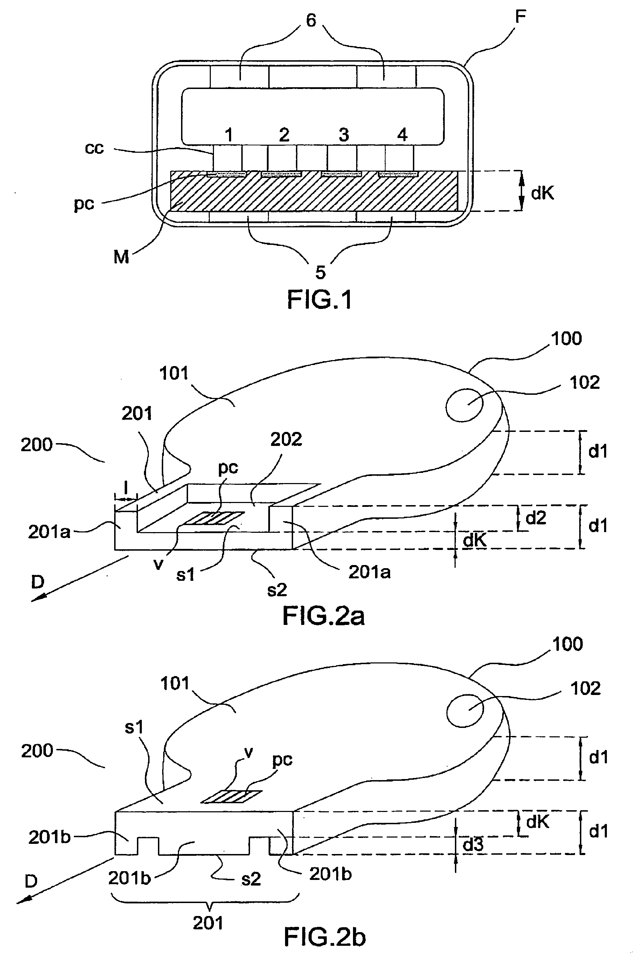

Le connecteur mâle est défini par ses dimensions et notamment son épaisseur, la position et la largeur des plages de contacts, et leur attribution, qui doit correspondre aux contre-contacts prévus dans le connecteur femelle. Une vue de face d'un connecteur femelle F, avec en coupe un connecteur mâle USB M est illustrée sur la figure 1. Elle montre la disposition 1, 2, 3 et 4 des contre-contacts cc correspondants respectivement à l'alimentation VDD, au fil de liaison de donnée D-, au fil de liaison de donnée D+ et à la masse.

Lorsque le connecteur M de la clef est introduit, ses plages de contact pc viennent chacune respectivement au contact sous un contre-contact correspondant cc, maintenues par des moyens de blocage 5 et 6 prévus dans le connecteur femelle.

Pour que la connexion se fasse correctement, l'épaisseur du connecteur mâle doit sensiblement correspondre à l'espace normalisé laissé libre entre les contre-contacts et les moyens de blocage. Cette épaisseur normalisée dK est de l'ordre de 2 millimètres.

Les connecteurs femelles USB présentent la particularité de permettre mécaniquement l'insertion du connecteur d'une clef de façon correcte comme indiqué sur la figure 1, mais aussi dans l'autre sens, c'est à dire dans l'exemple de la figure, plages de contact vers le bas de la figure, ce qui ne permet pas la connexion électrique. Cette particularité provoque une gêne à l'utilisation de ces clefs. Il est ainsi utile de munir ces clés électroniques d'un détrompeur mécanique.

Selon l'état de l'art, de tels détrompeurs mécaniques sont prévus dans des clefs électroniques qui sont réalisées à partir d'un circuit imprimé, avec les plages de contact du connecteur à une extrémité, le reste du circuit étant encapsulé dans un capot plastique de protection. Dans ces clefs, une bague de blindage est généralement prévue, autour du connecteur, qui forme un détrompeur mécanique : la bague vient en butée sur le cadre du connecteur femelle si le connecteur est mal introduit. Mais ces clefs sont onéreuses à fabriquer. En outre elles laissent peu de possibilités de personnalisation graphique, qui n'est possible que sur le capot, et cette personnalisation est également onéreuse.

D'autres techniques de fabrication ont été recherchées pour réduire le coût de ces clefs. Notamment on connaît de la demande de brevet français publiée sous le numéro FR 2 830 107, ou de la demande de brevet internationale publiée sous le numéro WO2006/018230 A1, un procédé de fabrication de clef USB qui utilise des étapes de fabrication empruntées aux techniques de fabrication bien connues des cartes à puce, dont la norme de référence est la norme ISO/IEC 7816. Ces techniques de fabrication comprennent les étapes de fabrication du corps de carte, par moulage plastique, ou bien par laminage de feuilles plastiques minces à partir de feuilles du commerce, des étapes de prédécoupage, notamment pour réaliser les mini-cartes détachables au format SIM, des étapes de montage des modules ou microcircuits avec les plages de contact, par usinage d'une cavité et fixation et report du module ou microcircuit dans la cavité en sorte que les plages du contact du module affleurent en surface de la carte. Ces différentes étapes sont bien connues de l'homme de l'art.
Ces techniques de fabrication ont été conçues pour permettre de produire des cartes à puce à bas coût. En outre, si au moins des étapes de fabrication de la clef correspondent aux techniques de fabrication de ces cartes, on peut fabriquer ces clefs sur les lignes de fabrication de cartes à puces déjà existantes. D'où une baisse des coûts supplémentaires. Mais ces clefs posent un problème de connectique, du fait de la différence d'épaisseur entre les cartes à puce et les clefs USB, du moins de leur connecteur USB. En effet on a vu que l'épaisseur normalisée d'un connecteur (mâle) de clef USB est de l'ordre de 2 millimètres. Une carte à puce au format ISO a une épaisseur normalisée de 0,76 millimètres, c'est à dire plus de deux fois moins épaisse. Cette épaisseur ne permet pas de réaliser un contact correct et fiable avec les contre-contacts d'un connecteur femelle USB. Pour résoudre ce problème, la demande de brevet français précitée prévoit l'utilisation de cales ou d'un adaptateur, ce qui complique la fabrication et/ou l'utilisation de la clef et en augmente le coût. Par ailleurs aucun détrompeur mécanique n'est prévu.

L'invention se propose de résoudre ces différents problèmes techniques.

Selon l'invention, on réalise un détrompeur mécanique d'une seule pièce avec un corps de clef, le détrompeur comprenant au moins un élément de guidage en relief de la surface du connecteur qui porte les plages de contact, ou de la surface opposée.

L'invention concerne donc un procédé de fabrication d'une clé électronique munie d'un connecteur normalisé USB avec un détrompeur mécanique, le procédé comprend la réalisation d'un corps de carte plastique aux dimensions normalisées ISO 7816 mais plus épais que l'épaisseur normalisée ISO 7816 et que l'épaisseur normalisée des connecteurs USB, la formation d'une ébauche de corps de clef détachable dans le corps de la carte, la réduction locale d'épaisseur du corps de clef jusqu'à l'épaisseur normalisée des connecteurs USB pour former le connecteur USB, la conservation locale de l'épaisseur du corps de carte pour former un détrompeur sous la forme d'au moins un élément de guidage en relief, la formation d'une cavité dans le connecteur USB pour loger un module comprenant une puce électronique et des plages de contact avec les plages de contact affleurant en surface du connecteur et l'élément de guidage étant situé du même côté que les plages de contact.

L'invention concerne également un corps de carte plastique comprenant une ébauche de corps de clef détachable.

Avantageusement, une personnalisation des clefs est effectuée à bas coûts par les techniques de personnalisation habituelles des cartes à puces, pour personnaliser les corps de carte et/ou de clef.

Une antenne radioémettrice peut avantageusement être intégrée dans le corps de clef, et connectée aux plages de contact. Lorsque la clef est du type à microcircuit comprenant une puce électronique au dos des plages de contact, les plots de la puce sont avantageusement connectés aux plages de contact et à l'antenne, permettant des communications suivant le protocole USB et des communications du type sans contact de proximité.

L'invention résulte dans une clef électronique, notamment une clef comprenant un corps de clef muni d'un connecteur USB avec un détrompeur mécanique, le connecteur comprenant des plages de contact disposées en surface du corps de clef, caractérisée en ce que le détrompeur mécanique est formé d'une seule pièce avec ledit corps de clef, et comprend au moins un élément de guidage en relief de la surface portant les plages de contact, et/ou de la surface opposée.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 déjà décrite est une vue de face et en coupe de connecteurs USB mâle et femelle en contact;
- les figures 2a et 2b représentent chacune une clef électronique à détrompeur mécanique du connecteur formé d'une seule pièce avec le corps de clef, selon deux exemples de mise en oeuvre de l'invention;
- les figures 3a et 3b sont des vues correspondantes et respectives de face et en coupe du connecteur USB à détrompeur introduit dans un connecteur femelle;
- la figure 4 illustre schématiquement une clef électronique sous une forme séparable d'un corps de carte obtenue suivant un premier mode de réalisation de l'invention;
- la figure 5 illustre en vue de face du connecteur USB de cette clef;
- la figure 6 est une vue transversale d'une languette à entaille rattachant le corps de clef au corps de carte;
- les figures 7 à 11 illustrent des étapes d'un procédé de fabrication selon l'invention;
- la figure 12 illustre schématiquement une clef électronique sous une forme séparable d'un corps de carte, selon un autre mode de réalisation de l'invention; et
- la figure 13 illustre une vue de face du connecteur USB de cette clef.

Une clef électronique comprend un détrompeur de connecteur formé d'une pièce avec un corps de clef, le détrompeur étant en relief de la surface du connecteur portant les plages de contact, ou de la surface opposée.

Dans la description qui va suivre, les plages de contact sont avantageusement celles d'un module qui comprend en outre au moins une puce électronique au dos des plages de contacts, auxquelles la puce est connectée, par toute technique connue. Un tel module est habituellement placé dans une cavité formée en surface du corps de clef, dans une zone du connecteur, en sorte que les plages de contact affleurent en surface. Ces techniques d'encartage sont bien connues. Dans ce contexte, on parle de vignette pour désigner l'ensemble des plages de contact. Ce terme est utilisé dans la suite de la description.

Mais l'invention ne se limite pas à des clefs comportant de tels modules. Elle s'applique plus généralement à la réalisation des clefs électroniques comportant des plages de contact en surface d'une zone du connecteur.

La figure 2a illustre une clef électronique 100. Elle comporte une partie 101, permettant sa préhension, qui peut être munie d'un trou 102 permettant de l'attacher à un porte-clef par exemple, et un connecteur 200 comprenant une vignette v de plages de contact pc affleurant en surface s1 et un détrompeur mécanique 201 en relief de cette surface s1. Le détrompeur 201 et la partie préhension délimitent la partie 202 du connecteur en surface s1 de laquelle est disposée la vignette. L'ensemble comprenant la partie préhension 101, le détrompeur 201 du connecteur et la partie 202 du connecteur devant recevoir la vignette est formé d'une pièce : c'est le corps de clef, avec une face verso, par exemple du côté de la vignette et une face recto. C'est un objet mince, qui dans la partie 202 avec la vignette, a une épaisseur normalisée dK. En dehors de cette partie, le corps de clef a une épaisseur d1 plus grande. De préférence et comme illustré, la partie 101 de préhension, et le détrompeur, ont de préférence la même épaisseur d1.

Le détrompeur mécanique comprend dans l'exemple deux éléments de guidage 201a, en relief de la surface s1, d'une hauteur d2 et d'une largeur I. Ils sont disposés un de chaque côté de la vignette v, en bord de connecteur. Ils ont une forme de longeron ou nervure, parallèle à une direction d'introduction D du connecteur 200 dans un connecteur femelle. En vue de face et en coupe, le connecteur a ainsi sensiblement une forme de U, les branches du U formant les éléments de guidage 201 a du détrompeur.

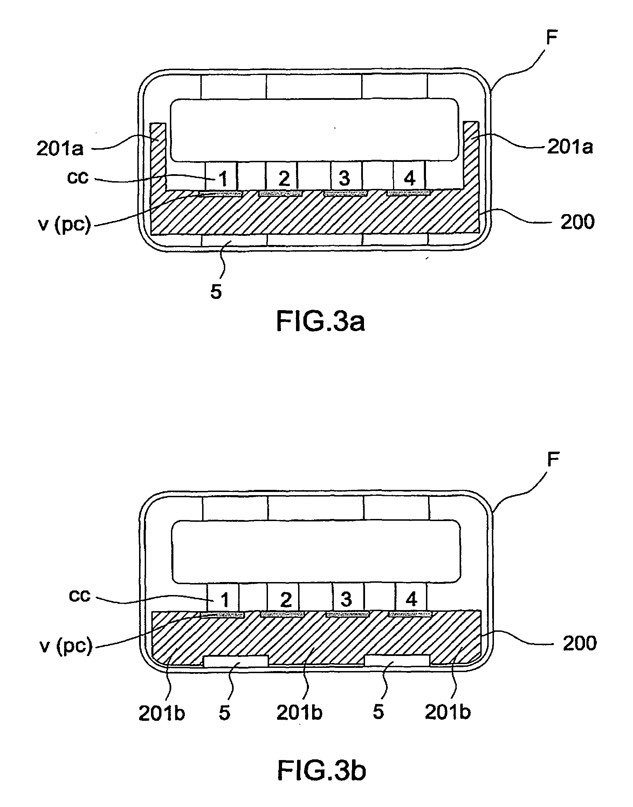

Le connecteur 200 ainsi formé peut être introduit entièrement dans le connecteur femelle F, dans un seul sens, comme illustré sur la figure 3a. Dans l'autre sens (non illustré), les éléments de guidage 201 a vont venir en butée contre le cadre du connecteur femelle F et empêcher son insertion.

On a vu que l'épaisseur normalisée dK est de l'ordre de 2 millimètres. Les dimensions (hauteur d2 et largeur I) des éléments de guidage 201 a du détrompeur sont en pratique déterminées en fonction de la configuration réciproque du connecteur femelle, pour ne pas gêner l'insertion du connecteur de clef USB dans le sens autorisé, et au contraire empêcher l'insertion dans l'autre sens. Ces dimensions seront avantageusement choisies avec d2 comprise entre 0,5 millimètre et 2, 5 millimètres, et I de l'ordre de 0,5 millimètre.

Le corps de clef hors la partie 202 d'épaisseur normalisée a une épaisseur d1 supérieure à dK, avantageusement comprise entre 2,5mm et 4,5 mm, assurant une préhension facile, et une bonne rigidité et résistance mécanique de la clef.

On notera que le détrompeur 201 pourrait comprendre un seul élément de guidage 201 a.

La figure 2b représente un autre exemple de clef électronique selon une autre mise en oeuvre de l'invention. Dans cet exemple, le détrompeur 201 est formé en relief de la surface s2 du connecteur opposée à la surface s1 portant la vignette v.

Il comprend dans l'exemple trois éléments de guidage 201 b, en forme de longeron ou de nervure, dont le positionnement et les dimensions correspondent aux espaces plus larges du connecteur femelle que l'on trouve sous les contre-contacts cc, entre les moyens de blocage 5, comme illustré sur la figure 3b. Deux éléments sont ainsi disposés sur chaque côté du connecteur parallèlement au sens d'introduction, et un troisième disposé parallèlement et à mi-distance des deux premiers.

Ces éléments de guidage ont une épaisseur supérieure à l'épaisseur normalisée dK du connecteur : ils sont en relief de la surface s2, d'une hauteur d3. Leurs dimensions sont en pratique déterminées en fonction de la configuration réciproque du connecteur femelle, pour ne pas gêner l'insertion du connecteur de clef USB dans le sens autorisé, et au contraire empêcher l'insertion dans l'autre sens. De préférence et comme illustré, la partie 101 et le détrompeur 201, ont la même épaisseur d1, supérieure à l'épaisseur normalisée du reste du connecteur dK.

Dans une variante, le détrompeur comprend seulement les deux éléments de guidage 201 b en bord de connecteur.

Dans une variante, le détrompeur comprend une combinaison des éléments de guidage 201 a et 201 b.

D'une manière générale, les éléments de guidage d'un détrompeur sont choisis avec une largeur et une épaisseur qui correspond aux caractéristiques du connecteur femelle. Suivant la direction D longitudinale, ils ont avantageusement une forme de nervure ou longeron, en continuité de la partie préhension, ce qui améliore les aspects mécaniques. Ils pourraient prendre une autre forme, par exemple une forme de plot. Ils assurent une fonction de guidage dans le sens d'insertion correct, et une fonction de butée dans l'autre sens, empêchant l'insertion. Ils améliorent la rigidité et la résistance mécanique de la clef. Ils sont de préférence disposés au droit de la tranche du connecteur (du corps de clef) par laquelle le connecteur est introduit dans un connecteur femelle.

Le connecteur présente ainsi essentiellement deux épaisseurs : une épaisseur d1 supérieure à l'épaisseur normalisée au niveau de chaque élément de guidage du détrompeur, le reste du connecteur étant à l'épaisseur normalisée dK.

Selon l'invention, la clef électronique se présente avantageusement sous une forme séparable d'un corps de carte. Le corps de carte sera typiquement celui d'une carte à puce au format ISO, mais plus épaisse, et plus épaisse que l'épaisseur normalisée dK du connecteur USB, ce qui permet d'utiliser les lignes de fabrication des cartes à puce et toutes les technologies associées pour fabriquer la clef. Le coût de fabrication de la clef s'en trouve réduit.

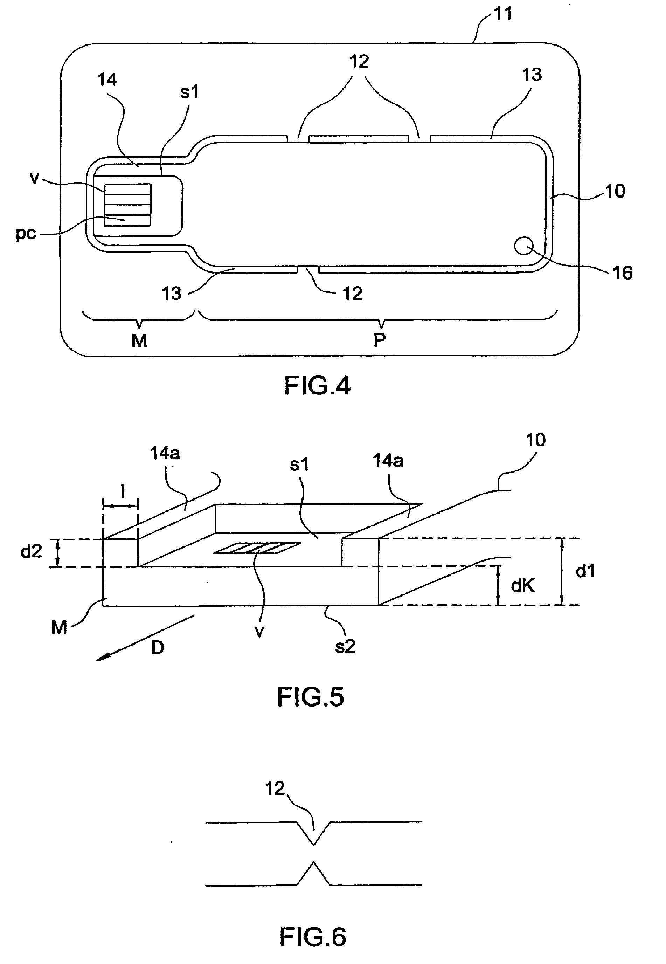

La figure 4 illustre un premier exemple d'une telle clef électronique sous forme séparable d'un corps de carte 11.

Elle comporte une ébauche 10 d'un corps de clef, attachée à un corps de carte 11 par des languettes 12. Dans la suite la référence 10 désigne indifféremment l'ébauche et le corps de clef. Le corps de clef comprend une partie P de préhension et un connecteur M.

Le connecteur M comprend une vignette v de plages de contact affleurant en surface. Cette vignette est formée de manière classique sur un circuit imprimé d'un module qui est encarté dans le corps de clef, en surface s1. Il comprend aussi un détrompeur 14, formé d'une pièce avec le corps de clef. Dans l'exemple, et comme illustré sur la figure 5, il comprend deux éléments de guidage 14a ayant une forme de longeron ou de nervure parallèle à une direction d'introduction D du connecteur. Ces éléments sont en relief de la surface s1 portant la vignette, un de chaque côté de la vignette. Vu de face (figure 5), le connecteur M a ainsi sensiblement une forme de U.

L'ébauche du corps de clef est réalisée par toute technique connue de découpage ou d'usinage, de manière à réaliser une fente 13 détourant le corps de clef 10 en ne laissant que des bretelles ou languettes 12 qui maintiennent le corps de clef attaché au corps de carte. Le corps de clef peut être détaché du corps de carte par simple pression mécanique, typiquement par simple pression des doigts, pour casser ces languettes. Ces techniques de découpage sont bien connues et notamment utilisées pour réaliser les mini cartes détachables au format SIM.

Les languettes 12 sont dans l'exemple à entaille, c'est à dire que leur épaisseur a été réduite en hauteur comme illustré dans la vue transversale de la figure 4, de manière à faciliter leur cassure. D'autres types de languettes peuvent être utilisés, comme celles que l'on verra en exemple avec le deuxième mode de réalisation décrit ensuite.

Dans l'exemple, la découpe 13 est complète autour du connecteur M, ce qui a l'avantage d'éviter que des résidus plastiques soient amenés par la cassure d'une languette à cet endroit, qui pourraient gêner la connexion électrique.

Le corps de carte 11 est fabriqué à partir d'étapes usuelles de fabrication des cartes à puce, utilisées de manière à assurer à la fois la rigidité et résistance mécanique de la clef. Ces étapes comprennent la réalisation d'un corps de carte aux dimensions normalisées ISO 7816 mais plus épaisse, et plus épaisse que l'épaisseur normalisée des connecteurs USB. De préférence, cette épaisseur est celle du corps de clef hors connecteur, et du détrompeur, le reste du connecteur étant à l'épaisseur normalisée dK.

Selon un premier mode de fabrication d'une telle clef électronique, le corps de carte avec la forme du connecteur avec le détrompeur en relief, est obtenu directement par moulage plastique, typiquement par moulage thermoplastique. L'ébauche du corps de clef 10 par des fentes 13 et languettes 12 peut être réalisée par le moulage lui-même, ou dans une étape ultérieure, typiquement par fraisage : on obtient la clef électronique illustrée sur les figures 4 et 5.

Selon un deuxième mode de fabrication, un corps de carte 11 est d'abord formé par assemblage de feuilles plastiques, par laminage et/ou collage, pour atteindre l'épaisseur d1 voulue. La forme du connecteur avec son détrompeur est ensuite obtenue par réduction de manière appropriée de l'épaisseur du corps, typiquement par usinage. L'ébauche 10 du corps de clef peut être réalisée avant ou après cette mise à l'épaisseur.

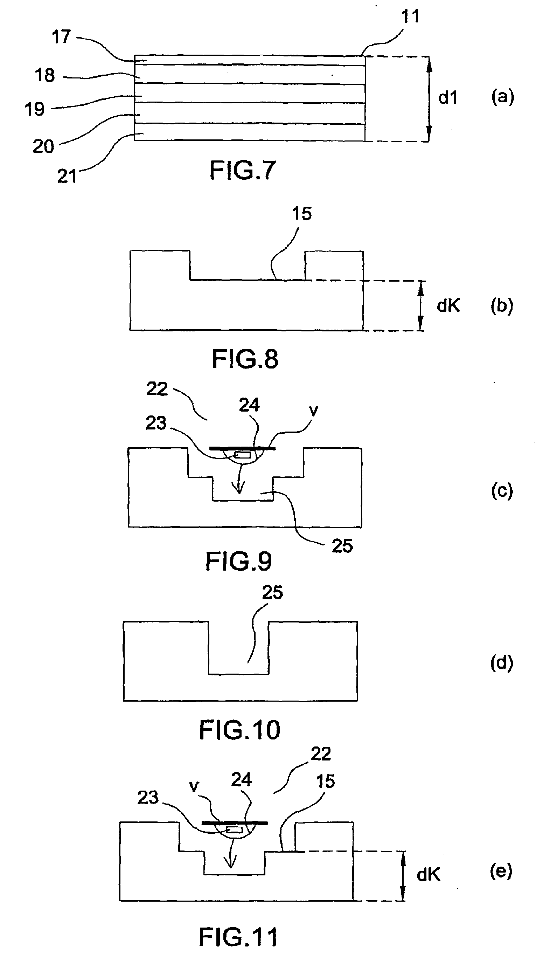

Des étapes détaillées de ce deuxième mode de fabrication sont plus particulièrement illustrées en exemple sur les figures 7 à 11.

La figure 7 illustre une étape (a) de formation du corps de carte 11 obtenu par assemblage de feuilles plastiques, 17 à 21. Au moins les feuilles 18 à 20 sont laminées les unes sur les autres. Les deux feuilles 17 et 21 qui forment les faces externes recto et verso du corps de carte sont typiquement des films adhésifs ou des adhésifs déposés sur les feuilles 18 et 20. Les feuilles de l'assemblage sont choisies, pour obtenir la dimension d1 voulue du corps de carte, au moins de 2,5 millimètres environ, pour obtenir la hauteur minimale en relief des éléments de guidage par rapport au plan de surface (0,5 millimètre environ pour d2) : le choix porte typiquement sur le nombre de feuilles et leurs épaisseurs respectives.

Un usinage du corps de clef est ensuite réalisé, pour obtenir l'épaisseur normalisée dK dans la zone 15 du connecteur hors détrompeur.

A ce stade il faut rappeler que la vignette v se présente généralement sous la forme d'un module comprenant typiquement un circuit imprimé sur lequel les plages sont réalisées, module que l'on vient encarter dans le corps de clef, au niveau du connecteur, en sorte que les plages affleurent en surface. Cette technique d'encartage bien connue, nécessite la formation d'une cavité. En outre, et comme représenté sur les figures 8 à 11, on peut prévoir d'utiliser un module 22 qui comprend une puce 23 au dos de la vignette v. La puce est noyée dans une goutte de résine 24, et les plots de la puce sont connectés aux plages de la vignette par toute technique connue.

L'usinage du connecteur illustré en figure 4 va ainsi comprendre en pratique deux étapes : une étape pour former la cavité pour encarter le module 22 préalablement préparé selon les techniques bien connues du domaine, et une étape de mise à l'épaisseur normalisée dK du connecteur hors détrompeur qui garde l'épaisseur initiale du corps de clef/carte.

On notera que l'ébauche 10 du corps de clef peut être réalisée avant, ou après l'usinage du corps de carte.

Les figures 8 et 9 illustrent une mise en oeuvre dans laquelle la zone 15 est d'abord usinée (étape (b) figure 8) puis une cavité 25 (étape (c) figure 8) dans laquelle le module 22 est ensuite encarté.

Les figures 10 et 11 illustrent une autre mise en oeuvre dans laquelle la cavité 25 est d'abord usinée (étape (d) figure 10), puis la zone 15 etle module 22 est encarté dans la cavité (étape (e) figure 11).

Typiquement ces différentes étapes sont en pratique réalisées sur des cartes issues de feuilles de grande dimension préalablement laminées ou découpées.

Lorsque le corps de carte 10 sera réalisé par moulage, on obtiendra directement un corps de carte moulé dont la forme du connecteur correspondra à celle illustrée sur les figures 9 ou 11 : le module 22 peut ensuite être encarté.

L'utilisation des étapes de fabrication des cartes à puce permet en outre de personnaliser une ou les faces du corps de carte et ou de clef à moindre coût, en utilisant des techniques d'impression standard des cartes à puce. Typiquement on peut ainsi réaliser une impression d'un motif sur chacune des faces recto et verso du corps de carte 11 et/ou du corps de clef 10. On peut réaliser un motif commun pour un lot de clefs électroniques, par exemple au recto, et un motif personnalisé au verso de chacune.

Par exemple, lorsque le corps de carte est réalisé par assemblage de feuilles (figure 7), l'impression pourra être réalisée par sérigraphie ou offset d'une feuille plastique, opaque ou transparente, qui sera avantageusement choisie avec une épaisseur inférieure ou égale à sensiblement 0,8 millimètre, permettant d'utiliser les machines d'impression de carte à puce. Cette feuille plastique imprimée sera alors revêtue dans l'étape d'assemblage, par une feuille plastique transparente de protection de surface.

Pour réaliser un motif commun à un lot de clefs, par exemple un lot de 10000 clefs, on imprimera ce motif en série sur une feuille plastique préalablement à l'étape d'assemblage pour réaliser un ensemble de clefs correspondant, typiquement une cinquantaine, et on répétera cette opération pour produire le lot complet. A titre d'exemple, si on reprend la figure 7, dans laquelle le corps de carte est formé par assemblage de cinq feuilles 17 à 21, on peut imprimer des motifs sur les feuilles 18 et 20, qui seront par exemple des feuilles PVC opaques de 0,665 millimètre, les feuilles 17 et 21 étant des feuilles de protection plastiques transparentes, typiquement des feuilles PVC de 0,08 millimètre. La couche centrale 19 sera typiquement une feuille en PVC ayant une épaisseur choisie pour atteindre l'épaisseur d1 du corps, par exemple, 1,010 millimètres, pour une épaisseur d1 de 2,5 millimètres environ.

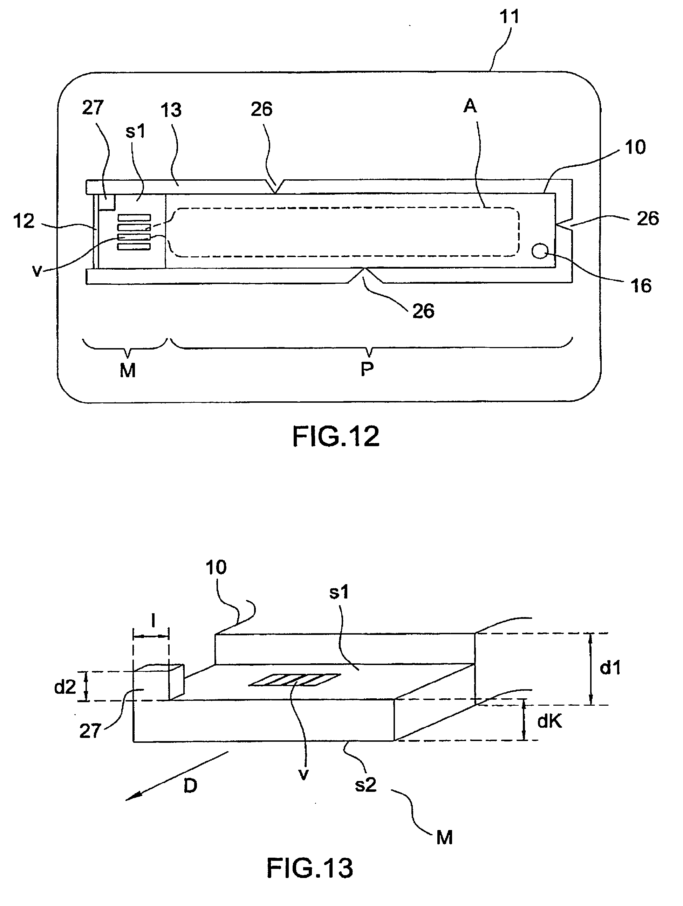

Les figures 12 et 13 illustrent respectivement en vue de face en coupe du connecteur et en vue de dessus un autre exemple d'une clef électronique sous forme séparable d'un corps de carte 11.

La clef illustrée est différente de celle de la figure 4, essentiellement dans la réalisation de l'ébauche, dans ce qu'elle contient un motif métallique d'une antenne A dans le volume du corps de clef, et dans la forme du détrompeur.

Dans la réalisation de l'ébauche 10 de carte par découpage, des languettes de différents types sont formées : des languettes 26 sans entaille ; une languette avec entaille 12 comme illustrée sur la figure 6, le long du bord du connecteur M qui est orthogonal au sens d'introduction de la clef.

L'antenne est réalisée par toute technique connue de manière à être noyée dans le corps de clef 11, essentiellement dans la partie préhension P.

A titre d'exemple, dans le cas où le corps de carte 10 est réalisé par assemblage de feuilles comme il a été décrit précédemment, cette antenne A sera typiquement réalisée par impression d'encre conductrice ou gravure de métal ou dépose de fil de cuivre sur une feuille plastique opaque ou transparente, par exemple sur une feuille PVC de 0,2 millimètre, avant l'étape d'assemblage. Dans l'étape d'assemblage, cette feuille est typiquement une des feuilles centrales, par exemple la feuille 19 sur la figure 7. La gravure est réalisée de manière à ce que l'antenne soit positionnée dans le volume du corps de clef dont l'ébauche 10 est réalisée dans une étape ultérieure.

Dans le cas avantageux où le module portant la vignette est de type microcircuit, avec une puce de circuit intégré dont les plots sont connectés aux plages de contacts USB, une connexion électrique entre la puce et l'antenne est réalisée, typiquement en connectant les plots de cette puce à cette antenne A selon toute technique connue d'encartage, permettant ainsi des communications sans contact de proximité.

Le détrompeur mécanique comprend un élément de guidage en forme de pilier 27, en relief de la surface s1 portant la vignette et sur un côté de la zone occupée par la vignette. Typiquement cet élément de guidage est disposé en bord de connecteur et au droit de la tranche du connecteur par laquelle il est introduit dans un connecteur femelle. La forme du connecteur qui en découle, illustrée plus clairement sur la vue de la figure 13, peut être obtenue par moulage ou usinage, comme précédemment décrit. Dans une variante, on peut réaliser un autre élément de guidage, sous forme d'un autre pilier par exemple, de l'autre côté opposé de la vignette.

L'invention ne se limite pas aux formes des éléments de guidage décrites à titre d'exemple. D'une manière générale le détrompeur mécanique formé d'une pièce avec le corps de clef prend toute forme adaptée à la forme du connecteur femelle, pour assurer une fonction de butée dans un sens, et de guidage dans l'autre, avec une forme du connecteur qui en découle qui peut être obtenue par une étape simple de moulage, ou d'usinage de la surface du corps de clef.

L'invention qui vient d'être décrite permet de réaliser une clef électronique USB séparée, ou séparable d'un corps de carte 11. Dans ce dernier cas, cette clef peut être séparée facilement du corps de carte, par cassure des languettes avec et/ou sans entaille, et attachée par exemple à un porte-clef par un trou 16 prévu dans le corps de clef à cet effet. Les corps de clef et de carte peuvent être avantageusement personnalisés sur chacune des faces verso et recto. La clef ne peut être introduite que dans le sens prévu dans tout connecteur femelle, grâce au détrompeur. Elle offre une bonne résistance mécanique et une bonne rigidité. Elle peut en option comprendre des moyens (19, A) permettant des communications du type sans contact, et notamment des communications du type sans contact, de proximité conformément à la norme ISO 14443, ou à la technologie dite NFC (*Near Field Communication*).

## Revendications

1. Procédé de fabrication d'une clé électronique munie d'un connecteur normalisé USB avec un détrompeur mécanique, ce procédé comprend la réalisation d'un corps de carte plastique (11) aux dimensions normalisées ISO 7816 mais plus épais que l'épaisseur normalisée ISO 7816 et que l'épaisseur normalisée (dk) des connecteurs USB, la formation d'une ébauche de corps de clef (10) détachable dans le corps de la carte, la réduction locale d'épaisseur du corps de clef jusqu'à l'épaisseur normalisée des connecteurs USB pour former le connecteur USB, la conservation locale de l'épaisseur (d1) du corps de carte pour former un détrompeur sous la forme d'au moins un élément de guidage en relief (14a), la formation d'une cavité (25) dans le connecteur USB pour loger un module (22) comprenant une puce électronique (23) et des plages de contact (pc) avec les plages de contact affleurant en surface (s1) du connecteur et l'élément de guidage étant situé du même côté que les plages de contact.

2. Procédé de fabrication selon la revendication 1, **caractérisé en ce que** l'élément de guidage (14a) est réalisé sous la forme d'un longeron parallèle à une direction d'introduction (D) du connecteur USB.

3. Procédé selon l'une des revendications 1 ou 2, **caractérisé en ce que** la formation du détrompeur est telle que la largeur (I) de l'élément de guidage (14a) est sensiblement égale à 0,5 millimètre.

4. Procédé de fabrication selon l'une des revendications 1 à 3, dans lequel la réalisation du corps de carte comprend une étape (a) d'assemblage de feuilles plastiques par laminage ou collage.

5. Procédé selon l'une des revendications 1 à 4, **caractérisé en ce que** l'épaisseur (d1) du corps de carte (11) est sensiblement comprise entre 2,5 millimètres et 4,5 millimètres.

6. Procédé selon la revendication 4, **caractérisé en ce qu'**il comprend une étape d'impression d'un motif commun à un ensemble de clefs électroniques à réaliser, ledit motif étant imprimé en série sur une feuille plastique d'épaisseur inférieure ou égale à 0,8 millimètre, préalablement à l'étape d'assemblage, pour réaliser un ensemble de clefs correspondant.

7. Corps de carte plastique (11) aux dimensions normalisées ISO 7816 mais plus épais que l'épaisseur normalisée ISO 7816 et que l'épaisseur normalisée (dk) des connecteurs USB, ce corps de carte comprenant une ébauche de corps de clef (10) détachable, et le corps de clef comprenant une partie formant connecteur USB ayant une épaisseur normalisée (dk) de connecteur USB et un détrompeur ayant l'épaisseur (d1) de la carte et formant au moins un élément de guidage en relief (14a), le connecteur comportant en outre une cavité (25) dans laquelle est placé un module (22) comprenant une puce électronique (23) et des plages de contact (pc) avec les plages de contact affleurant en surface (s1) du connecteur USB et l'élément de guidage étant situé du même côté que les plages de contact.

8. Corps de carte plastique selon la revendication 7, **caractérisé en ce que** l'élément de guidage (14a) est un longeron parallèle à une direction (D) d'introduction du connecteur.

9. Corps de carte plastique selon l'une des revendications 7 ou 8, **caractérisé en ce que** la largeur (I) de l'élément de guidage (14a) est de l'ordre de 0,5mm.

10. Corps de carte plastique selon l'une des revendications 7 à 9, **caractérisé en ce que** l'épaisseur (d1) du corps de carte est sensiblement comprise entre 2,5 millimètres et 4,5 millimètres.

11. Corps de carte plastique selon l'une quelconque des revendications 7 à 10, **caractérisé en ce qu'**il comprend au moins une face imprimée.

## Patentansprüche

1. Verfahren zur Herstellung eines elektronischen Schlüssels, der mit einem standardmäßigen USB-Verbinder mit einem mechanischen Verpolungsschutz versehen ist, wobei das Verfahren Folgendes beinhaltet: Realisieren eines Plastikkartengehäuses (11) mit standardmäßigen ISO7816-Maßen, aber dicker als die standardmäßige ISO7816 Dicke und die standardmäßige Dicke (dk) von USB-Verbindern, Ausbilden eines abnehmbaren Schlüsselrohlings (10) im Gehäuse der Karte, örtliches Verringern der Dicke des Schlüssels auf die standardmäßige Dicke für USB-Verbinder, um den USB-Verbinder zu bilden, örtliches Beibehalten der Dicke (d1) des Kartengehäuses zum Bilden eines Verpolungsschutzes in Form von wenigstens einem räumlichen Führungselement (14a), Bilden einer Aussparung (25) im USB-Verbinder zum Aufnehmen eines Moduls (22), das einen elektronischen Chip (23) und Kontaktbereiche (pc) umfasst, wobei die Kontaktbereiche mit einer Oberfläche (s1) des Verbinders bündig sind und das Führungselement sich auf derselben Seite befindet wie die Kontaktbereiche.

2. Herstellungsverfahren nach Anspruch 1, **dadurch gekennzeichnet, dass** das Führungselement (14a) in Form eines Längsträgers parallel zu einer Einführungsrichtung (D) des USB-Verbinders realisiert wird.

3. Verfahren nach Anspruch 1 oder 2, **dadurch gekennzeichnet, dass** die Bildung des Verpolungsschutzes derart ist, dass die Breite (1) des Führungselements (14a) im Wesentlichen gleich 0,5 Millimeter ist.

4. Herstellungsverfahren nach einem der Ansprüche 1 bis 3, wobei die Realisierung des Kartengehäuses einen Schritt (a) des Zusammenfügens von Plastikfolien durch Laminieren oder Kleben beinhaltet.

5. Verfahren nach einem der Ansprüche 1 bis 4, **dadurch gekennzeichnet, dass** die Dicke (d1) des Kartengehäuses (11) im Wesentlichen zwischen 2,5 Millimeter und 4,5 Millimeter liegt.

6. Verfahren nach Anspruch 4, **dadurch gekennzeichnet, dass** es vor dem Zusammenrugungsschritt einen Schritt des Druckens eines Musters beinhaltet, das einem Satz von zu realisierenden elektronischen Schlüsseln gemeinsam ist, wobei das Muster in Serie auf eine Plastikfolie gedruckt wird, deren Dicke gleich oder kleiner als 0,8 Millimeter ist, um eine entsprechende Schlüsselbaugruppe zu realisieren.

7. Plastikkartengehäuse (11) mit standardmäßigen ISO7816-Maßen, aber dicker als die standardmäßige IS07816-Dicke und die standardmäßige Dicke (dk) von USB-Verbindern, wobei das Kartengehäuse einen abnehmbaren Schlüsselrohling (10) und der Schlüssel einen Teil umfasst, der einen USB-Verbinder mit einer standardmäßigen USB-Verbinderdicke (dk) und einen Verpolungsschutz mit der Dicke (d1) der Karte bildet, und der wenigstens ein räumliches Führungselement (14a) bildet, wobei der Verbinder ferner eine Aussparung (25) aufweist, in der sich ein Modul (22) befindet, das einen elektronischen Chip (23) und Kontaktbereiche (pc) umfasst, wobei die Kontaktbereiche mit einer Oberfläche (s1) des USB-Verbinders bündig sind und das Führungselement sich auf derselben Seite befindet wie die Kontaktbereiche.

8. Plastikkartengehäuse nach Anspruch 7, **dadurch gekennzeichnet, dass** das Führungselement (14a) ein Längsträger parallel zu einer Einführungsrichtung (D) des Verbinders ist.

9. Plastikkartengehäuse nach Anspruch 7 oder 8, **dadurch gekennzeichnet, dass** die Breite (1) des Führungselements (14a) in der Größenordnung von 0,5 mm liegt.

10. Plastikkartengehäuse nach einem der Ansprüche 7 bis 9, **dadurch gekennzeichnet, dass** die Dicke (d1) des Kartengehäuses im Wesentlichen zwischen 2,5 Millimeter und 4,5 Millimeter liegt.

11. Plastikkartengehäuse nach einem der Ansprüche 7 bis 10, **dadurch gekennzeichnet, dass** es wenigstens eine gedruckte Fläche aufweist.

## Claims

1. A method for manufacturing an electronic key provided with a standard USB connector with mechanical polarizer, which method comprises the realisation of a plastic card body (11) according to standard ISO 7816 dimensions but thicker than the standard ISO 7816 thickness and the standard thickness (dk) of USB connectors, the formation of a detachable key body preform (10) in the body of the card, the local reduction of the thickness of the key body to the standard thickness for USB connectors so as to form the USB connector, the local preservation of the thickness (d1) of said card body so as to form a polarizer in the form of at least one contoured guiding element (14a), the formation of a recess (25) in the USB connector to house a module (22) that comprises an electronic chip (23) and contact areas (pc), with said contact areas being flush with a surface (s1) of said connector and said guiding element being located on the same side as said contact areas.

2. The manufacturing method according to claim 1, **characterised in that** said guiding element (14a) is realised in the form of a longeron parallel to a direction of introduction (D) of said USB connector.

3. The method according to claim 1 or 2, **characterised in that** the formation of the polarizer is such that the width (1) of said guiding element (14a) is substantially equal to 0.5 millimetres.

4. The manufacturing method according to any one of claims 1 to 3, wherein the realisation of said card body comprises a step (a) of assembling plastic sheets by laminating or by bonding.

5. The method according to any one of claims 1 to 4, **characterised in that** the thickness (d1) of said card body (11) is substantially between 2.5 millimetres and 4.5 millimetres.

6. The method according to claim 4, **characterised in that** it comprises a step of printing, prior to the assembly step, a pattern that is common to a set of electronic keys to be realised, said pattern being printed in series on a plastic sheet, the thickness of which is less than or equal to 0.8 millimetres so as to realise a corresponding key assembly.

7. A plastic card body (11) according to standard ISO 7816 dimensions but thicker than the standard ISO 7816 thickness and the standard thickness (dk) of USB connectors, said card body comprising a detachable key body preform (10), and the key body comprising a part that forms a USB connector with a standard USB connector thickness (dk) and a polarizer having the thickness (d1) of the card and forming at least one contoured guiding element (14a), said connector further comprising a recess (25) in which a module (22) is placed that comprises an electronic chip (23) and contact areas (pc), with said contact areas being flush with a surface (s1) of said USB connector and said guiding element being located on the same side as said contact areas.

8. The plastic card body according to claim 7, **characterised in that** said guiding element (14a) is a longeron parallel to a direction of introduction (D) of said connector.

9. The plastic card body according to claim 7 or 8, **characterised in that** the width (1) of said guiding element (14a) is of the order of 0.5mm.

10. The plastic card body according to any one of claims 7 to 9, **characterised in that** the thickness (d1) of said card body is substantially between 2.5 millimetres and 4.5 millimetres.

11. The plastic card body according to any one of claims 7 to 10, **characterised in that** it comprises at least one printed face.
